# EUROPÄISCHE PATENTSCHRIFT

(11) **EP 0 404 288 B1**
(45) Veröffentlichungstag und Bekanntmachung des Hinweises auf die Patenterteilung: **02.08.1995**
(21) Anmeldenummer: 90250156.8
(22) Anmeldetag: 20.06.1990
(51) Int. Cl.: B29C 45/17, B29C 45/64

(54) **Säulenzieheinrichtung für Spritzgiessmaschinen**
Tie bars extraction apparatus for injection moulding machines
Appareil pour retirer des colonnes sur des machines de moulage par injection

(30) Priorität: 21.06.1989 DE 3920690
(43) Veröffentlichungstag der Anmeldung: 27.12.1990
(73) Patentinhaber: MANNESMANN Aktiengesellschaft, 40027 Düsseldorf (DE)
(72) Erfinder: Müller, Helmut, Dipl.-Ing., D-8460 Schwandorf (DE)
(74) Vertreter: Presting, Hans-Joachim, Dipl.-Ing.

(56) Entgegenhaltungen:
- EP-A- 0 313 035
- DE-A- 2 235 758
- DE-A- 2 455 702
- DE-A- 2 623 392
- GB-A- 1 537 133
- US-A- 3 362 733

## Beschreibung

Die Erfindung betrifft eine Säulenzieheinrichtung für Spritzgießmaschinen mit einer feststehenden Werkzeugspannplatte, einer beweglichen Platte sowie einer Endplatte und durch diese Platten geführte Säulen, die mit Säulenmuttern versehen sind, welche sich an der Endplatte abstützen, und die durch an der beweglichen Platte angeordnete Mittel befestigbar sind.

Bei der Verarbeitung von Kunststoffen kommen Spritzgießmaschinen zum Einsatz, die zur Befestigung der Form- oder Werkzeughälftenplatten, sogenannte Werkzeugaufspannplatten, besitzen. Durch diese Platten sind Säulen geführt, wobei eine zwischen einer festen Platte und einer Endplatte angeordnete bewegliche Platte koaxial zu den Säulen verfahrbar ist. Zwischen der beweglichen Platte und der feststehenden Platte ist das Werkzeug angeordnet.

Bei Kunststoffbetrieben, die ein vielfältiges Programm an Kunststoffspritzteilen aufweisen, ist eine häufige Umrüstung der Spritzgießmaschine erforderlich. Dabei können Werkzeuge, die größer als der Parallelabstand der Säulen sind, nur bei ausgebauten Säulen aufgespannt werden. Hierzu sind die Säulen aus dem Bereich zwischen der festen und der beweglichen Platte zu entfernen.

Zum Wechseln des Werkzeugs werden die Säulen in axialer Richtung bewegt. Das geschieht in der Weise, daß an der feststehenden Platte sowie an der Endplatte angeordnete Klemmvorrichtungen gelöst werden und die Säulen durch an der beweglichen Platte vorgesehene Mittel angeklemmt und durch Verfahren der beweglichen Platte axial bewegt werden.

Im nächsten Schritt wird die Säule an der Endplatte gehaltert und die bewegliche Platte fährt nach Lösen der Klemmung in Richtung der feststehenden Platte. Hier beginnt der oben beschriebene Vorgang erneut, die Säule wird an der beweglichen Platte angeklemmt und in einem oder mehreren weiteren Hüben aus dem Bereich der Aufspannfläche gefahren.

Als Klemmvorrichtung der beweglichen Platte kommen üblicherweise hydraulisch betätigte Halbschalen zum Einsatz, wie sie beispielsweise aus der DE-A-22 35 758 und der GB-A-15 37 133 bekannt sind.

Aus der EP-A-0 313 035 geht eine Schließeinheit für eine Spritzgießmaschine hervor, bei der die bewegliche Platte mittels eines hydraulisch beaufschlagten Kolben klemmbar ist.

Eine weitere technische Möglichkeit bietet das Klemmen durch Keile. So sind aus der DE-PS 35 28 154 - hier zum Verbinden einer Förderschnecke mit einer Spindel - Axialverriegelung an Kunststoffspritzgießmaschinen bekannt, bei denen ein radial führbarer durch eine radial liegende Kolben-Zylinder-Einheit bewegbarer Keil die Klemmung bewirkt.

Die bekannten Klemmvorrichtungen erfordern im gesamten radialen Klemmbereich einen relativ großen Einbauraum. Die die Klemmung bewirkenden Elemente weisen eine hohe Steifigkeit auf. Bei den erforderlichen Klemmkräften kann es zu Beschädigungen der Säulenoberfläche kommen. Zum Ausgleich der Bewegungen der Klemmelemente relativ zur Säule können Gelenke erforderlich sein. Diese Gelenke erhöhen noch die insgesamt bereits hohe Zahl der Elemente der Klemmvorrichtung.

Eine Vielzahl von Spritzgießmaschinen weisen zum Spannen der Säulen Muttern auf, die sich an der Endplatte abstützen. Die Säulenmuttern sind üblicherweise mit einem Außengewinde versehen, das mit einem Gewinde eines Sonnenrades kämmt.

Beim axialen Bewegen der Säulen neigen die mit ihnen verbundenen Säulenmuttern dazu, sich um einen bestimmten Winkelbetrag zu verdrehen. Dies hat zur Folge, daß der axiale Abstand der einzelnen Muttern zur Endplatte unterschiedlich ist, was zu Verspannungen der Endplatte und zu unterschiedlichen Belastungen der Säulen und des Werkzeugs führt.

Darüber hinaus verändert sich bei Spritzgießmaschinen, die mit einem Sonnenrad zur Verdrehung der Säulenmuttern versehen sind, die Stellung der Zähne des Sonnenrades zu denen der Außenverzahnung der einzelnen Säulenmuttern. Beim Remontieren der Säulen kommt es hierbei zu Behinderungen und Verzögerungen.

Aufgabe der Erfindung ist es, eine Einrichtung zum automatischen Ziehen von mit Säulenmuttern versehenen Säulen zu schaffen, bei der mit einfachen Bauteilen ein schnelles, beschädigungsfreies axiales Ziehen sowie ein exaktes Remontieren der Säulen bei hohem Mechanisierungsgrad ermöglicht wird.

Die Aufgabe wird erfindungsgemäß durch die Merkmale des kennzeichnenden Teils des Anspruchs 1 gelöst. Als Befestigungsmittel werden mit Kraftmitteln spann- und entspannbare Schellen eingesetzt.

Eine Schelle besitzt im Gegensatz zu einer Klemmbacke oder einem Keil eine deutlich dünnere Wand und stellt somit ein biegeelastisches Element dar, das sich beim Klemmen an die Oberfläche der Säule anschmiegt. Die Elastizität der Schelle ermöglicht ein satte Anlage und damit eine einwandfreie Kraftverteilung über den ganzen Klemmumfang an der Säule.

Durch hydraulische Betätigungslemente ist die Schelle schnell und leicht von der Säule zu lösen. Im gespannten Zustand wird die erforderliche Kraft zum axialen Verschieben der Säule durch Reibschluß aufgebracht.

Durch die Elastizität der Schelle sind bei den auftretenden Bewegungen zwischen der Klemmvorrichtung und der Säule in der Größenordnung von 0,1 mm keinerlei Gelenke zwischen der Schelle und der beweglichen Platte erforderlich.

Ein weiteres kennzeichnendes Merkmal der Erfindung ist der Aufbau der Säulenmutter. Die Säulenmuttern sind zweiteilig ausgebildet. Zum Verspannen der einzelnen Platten bilden beide Schraubenteile eine Einheit und lassen sich mittels eines Sonnenrades verdrehen. Während des Ziehvorgangs der Säule werden die Schraubenteile soweit voneinander wegbewegt, bis sie sich, gegen die Gewindesteigung der Spindel klemmen und gegenseitig kontern. Die Länge des Weges ist abhängig vom Gewindespiel. Die Innengewinde der Muttern und die Außengewinde der Säulen können normal gefertigt werden. Bei der Fertigung ist eine Passung aus dem mittleren Toleranzfeld zu wählen, um bei genügend großer Genauigkeit ein ausreichendes Maß der axialen Bewegung beider Schraubenteile zu erreichen. Als mittleres Toleranzfeld kommen hier Toleranzen wie 4g für das Säulengewinde und 4H für das Gewinde der Säulenmutter in Frage.

Zwischen den als Ringe ausgebildeten Schraubenmutternteilen sind als Kraftmittel Federn vorgesehen, die achsparallel zur Säule angeordnet sind. Bei dem Einsatz von Federn dienen die bei Spritzgießmaschinen häufig eingesetzten Spannbacken zur Aufhebung des Kontereffektes bei eingefahrener Säule. Hierbei drücken die Spannbacken beide Teile der Säulenmutter gegeneinander und diese gemeinsam gegen die Endplatte mit der Folge, daß die Säulenmutter wieder über das Sonnenrad leicht verstellt ist. Als ein leicht verstellbares aber durch die wegen der drehenden Mutter aufwendiges Kraftmittel bietet sich ein Kolben-Zylinder-Einheit an.

Zur Feinkorrektur beim Einfädeln der auf der Säule arretierten Säulenmutter in die Zahnreihe des Sonnenrades sind am Kopf jeder Säule Anschläge mit einer Schräge vorgesehen, an die eine Leiste zur Korrektur der Säule angreifen kann. Die Länge des Anschlags ist größer gewählt als die Zahnbreite. Dies ermöglicht den richtigen Eingriff der Säulenmutterverzahnung in die Verzahnung des Sonnenrades. Kleine Winkelverdrehungen können über die Schräge am Anschlag korrigiert werden.

Ein Beispiel der Erfindung ist in den folgenden Figurgen dargelegt. Es zeigen:
- Fig. 1: ein Schema einer Säulenzieheinrichtung,
- Fig. 2: Schnitte einer Schelle,
- Fig. 3: Schema einer Säulenmutter,
- Fig. 4: Zusammenstellung einer Spritzgießmaschine.

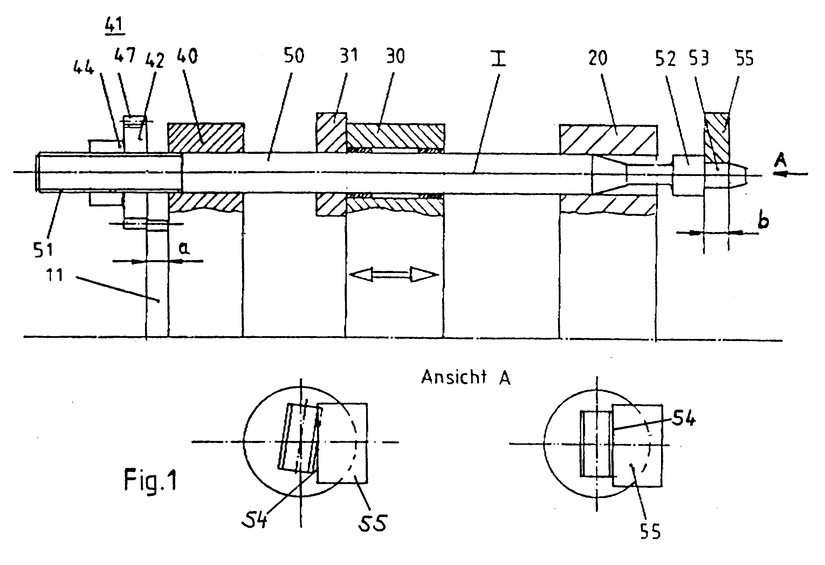

Die Fig. 1 zeigt eine Säule 50, die durch eine feststehende Werkzeugplatte 20, eine bewegliche Platte 30 und eine Endplatte 40 geführt ist. Die Säule 50 weist einenends ein Gewinde 51 auf, auf das eine Säulenmutter 41 aufachraubbar ist. Die Säulenmutter 41 besteht aus dem von der Endplatte 40 wegweisenden Teil 44 und dem zur Endplatte 40 hinweisenden Teil 42. Am Teil 42 ist eine Außenverzahnung 47 vorgesehen, die mit einem mit einer Verzahnung versehenen Sonnenrad 11 kämmen kann.

An der beweglichen Platte 30 ist eine Schelle 31 angeordnet.

An dem dem Gewinde 51 entgegengesetzten Kopf 52 der Säule 50 ist ein Anschlag 53 vorgesehen, der parallel zur Achse I eine Auflagefläche 54 aufweist, die sich an einer mit einer entsprechenden Auflagefläche versehenen Leiste 55 abstützt (s. Ansicht A in Fig. 1).

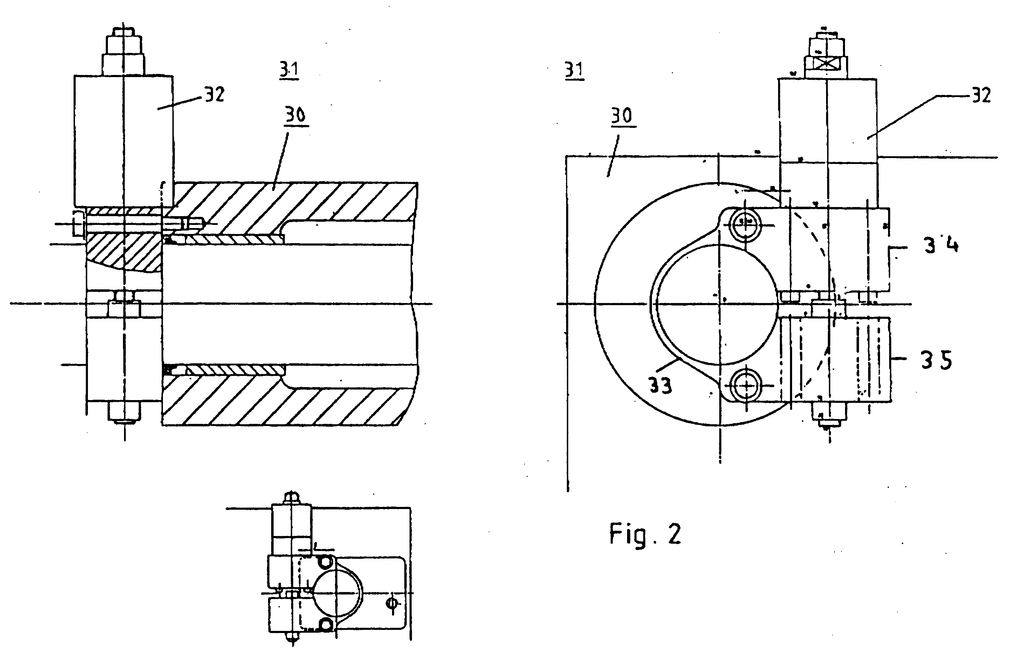

Die Fig. 2 zeigt den Aufbau der Schelle 31, die an der beweglichen Platte 30 befestigt ist. Die Schelle 31 besteht etwa zur Hälfte aus einer dünnwandigen Büchsenhälfte 33, an der zwei dickwandige, der Form der Säule 50 angepaßte Schenkel 34, 35 angebracht sind, die durch eine hydraulische Kolben-Zylinder-Einheit 32 bewegbar sind. Die Breite b der Auflagefläche 54 ist breiter als die Zahnbreite a des Sonnenrades 11.

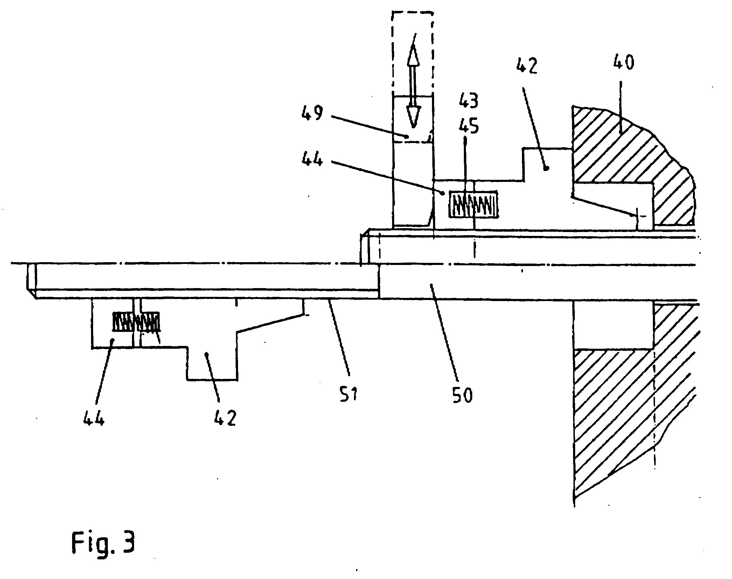

Die Fig. 3 zeigt die Säule 50 mit dem Gewinde 51, mit den beiden Mutterteilen 42 und 44. Zwischen dem zur Endplatte 40 weisenden Teil 42 der Säulenmutter 41 und dem von der Endplatte 40 wegweisenden Teil 44 sind entspannbare Elemente 43, und zwar die Federn 45, vorgesehen. An gleicher Stelle können ansteuerbare Kraftmittel 46 (nicht dargestellt) eingebaut werden.

Im unteren Teil der Fig. 3 sind die Mutternhälften 42,44 durch die Federn auseinandergedrückt und weisen zueinander einen Abstand auf. Im oberen Teil der Fig. 3 wird die Mutternhäfte 44 durch eine Spannbacke 49 so weit achsparallel bewegt, bis die Mutternteile 44 und 42 sich berühren.

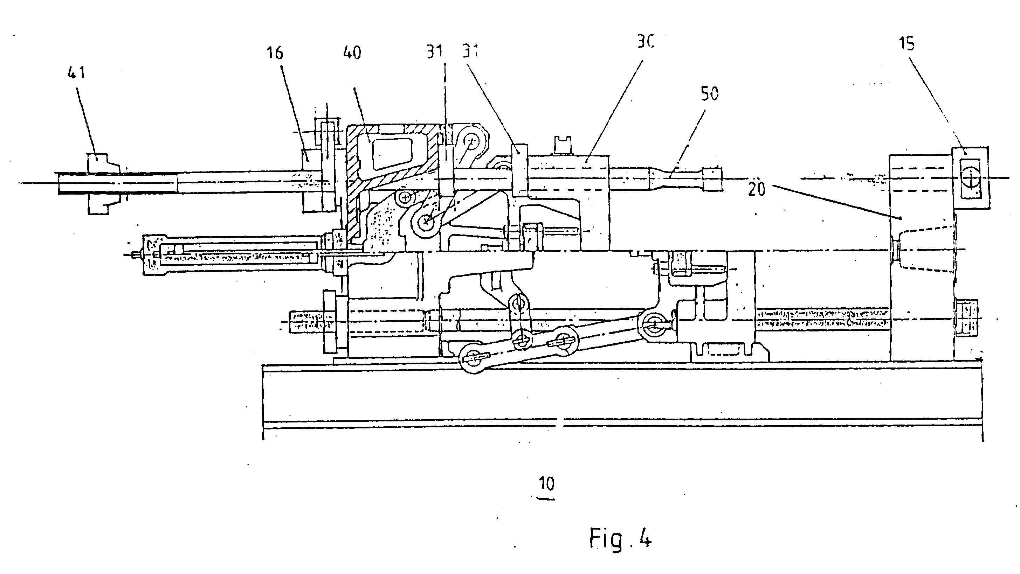

In Fig. 4 ist eine mit Kniehebeln ausgerüstete Spritzgießmaschine 10 dargestellt mit im oberen Bereich der Fig. 4 gelöster und herausgezogener und im unteren Bereich arretierter Säule 50. Wie in der Fig. 1 ist die Säule 50 durch die Platte, und zwar die feststehende Werksplatte 20, die bewegliche Platte 30 und die Endplatte 40, geführt.

An der feststehenden Werkzeugspannplatte 20 ist eine Klemmvorrichtung 15 und an der Endplatte 40 eine Klemmvorrichtung 16 vorgesehen.

Am Fuß der herausgefahrenen Säule 50 reitet die Säulenmutter 41.

In der Fig. 4 sind an der beweglichen Platte 30 wie auch an der Endplatte 40 Schellen 31 vorgesehen.

## Patentansprüche

1. Säulenzieheinrichtung für Spritzgießmaschinen mit einer feststehenden Werkzeugspannplatte (20), einer beweglichen Platte (30) sowie einer Endplatte (40) und durch diese Platten geführte Säulen (50), die mit Säulenmuttern (41) versehen sind, welche sich an der Endplatte (40) abstützen, und die durch an der beweglichen Platte (30) angeordnete Mittel befestigbar sind,
dadurch gekennzeichnet,
daß an der beweglichen Platte (30) mindestens ein Befestigungsmittel vorgesehen ist, welches als biegelastische Schelle (31) ausgebildet ist, die mit fremdgesteuerten Kraftmitteln spann- und entspannbar ist und die Säule (50) koaxial umfaßt, und
daß die an der Endplatte (40) sich abstützenden Säulenmuttern (41) Bauteile (42, 44) zur Eigenkonterung aufweisen.

2. Säulenzieheinrichtung nach Anspruch 1,
dadurch gekennzeichnet,
daß die fremdgesteuerten Kraftmittel (32) hydraulische Kolben-Zylinder-Einheiten sind.

3. Säulenzieheinrichtung nach Anspruch 2,
dadurch gekennzeichnet,
daß die hydraulischen Kolben-Zylinder-Einheiten (32) elektrisch oder elektronisch ansteuerbar sind.

4. Säulenzieheinrichtung nach Anspruch 1,
dadurch gekennzeichnet,
daß die Säulenmutter (41) aus zwei ringförmigen Bauteilen (42, 44) besteht, die ein Innengewinde aufweisen und die durch Elemente (43) koaxial zur Säule (50) relativ zueinander bewegbar sind.

5. Säulenzieheinrichtung nach Anspruch 4,
dadurch gekennzeichnet,
daß das Gewinde (48) der Bauteile (42, 44) der Säulenmutter (41) zum Gewinde (51) der Säule (50) ein Spiel im mittleren Toleranzfeld aufweist.

6. Säulenzieheinrichtung nach Anspruch 4,
dadurch gekennzeichnet,
daß als Elemente (43) Federn (45) vorgesehen sind.

7. Säulenzieheinrichtung nach Anspruch 4,
dadurch gekennzeichnet,
daß als Elemente (43) ansteuerbare Kraftmittel (46), z. B. hydraulische Kolben-Zylinder-Einheiten, vorgesehen sind.

8. Säulenzieheinrichtung nach Anspruch 4,
dadurch gekennzeichnet,
daß die der Endplatte (40) zugewandten Bauteile (42) der Säulenmutter (41) eine Außenverzahnung (47) aufweisen, die mit einem Sonnenrad (11) kämmt.

9. Säulenzieheinrichtung nach Anspruch 1,
dadurch gekennzeichnet,
daß an dem mit der feststehenden Werkzeugspannplatte (20) verbindbaren Kopf (52) der Säule (50) ein Anschlag (53) mit mindestens einer parallel zur Säulenachse (I) angeordneten, sich an einer Leiste (55) abstützenden Auflagefläche (54) vorgesehen ist.

10. Säulenzieheinrichtung nach den Ansprüchen 8 und 9,
dadurch gekennzeichnet,
daß die Länge (b) der Auflagefläche (54) größer ist als die Zahnbreite (a) des Sonnenrades (11).

## Claims

1. Tie bar displacement equipment for injection moulding machines comprising a fixed tool platen (20), a movable platen (30) and an end platen (40) and tie bars (50) guided through these platens, which tie bars (50) are provided with tie bar nuts (41) which are supported on the end platen (40) and which may be secured by means arranged on the movable platen (30), characterized in that at least one fastening means is provided on the movable platen (30), which fastening means is constructed as a bendingly resilient clip (31) which may be tensioned and released with externally controlled power means and coaxially encloses the tie bar (50) and in that the tie bar nuts (41) supported on the end platen (40) comprise components (42, 44) for self-locking.

2. Tie bar displacement equipment according to claim 1, characterized in that the externally controlled power means (32) are hydraulic piston/cylinder units.

3. Tie bar displacement equipment according to claim 2, characterized in that the hydraulic piston/cylinder units (32) are electrically or electronically actuatable.

4. Tie bar displacement equipment according to claim 1, characterized in that the tie bar nut (41) consists of two annular components (42, 44) which comprise an internal thread and may be moved relative to each other by elements (43) coaxial with the tie bar (50).

5. Tie bar displacement equipment according to claim 4, characterized in that the thread (48) of the components (42, 44) of the tie bar nut (41) exhibits play in the average tolerance zone with respect to the thread (51) of the tie bar (50).

6. Tie bar displacement equipment according to claim 4, characterized in that springs (45) are provided as elements (43).

7. Tie bar displacement equipment according to claim 4, characterized in that actuatable power means (46), e.g. hydraulic piston/cylinder units, are provided as elements (43).

8. Tie bar displacement equipment according to claim 4, characterized in that the components (42), facing the end platen (40), of the tie bar nuts (41) comprise external teeth (47) which mesh with a sun wheel (11).

9. Tie bar displacement equipment according to claim 1, characterized in that a stop (53) with at least one bearing face (54) arranged parallel to the tie bar axis (I) and supported on a strip (55) is provided at the head (52), connectable with the fixed tool platen (20), of the tie bar (50).

10. Tie bar displacement equipment according to claims 8 and 9, characterized in that the length (b) of the bearing face (54) is greater than the tooth face width (a) of the sun wheel (11).

## Revendications

1. Dispositif d'extraction de colonnes pour des machines de moulage par injection, comportant une plaque de serrage d'outil fixe (20), une plaque mobile (30), ainsi qu'une plaque d'extrémité (40) et des colonnes (50) guidées par ces plaques, qui sont munies d'écrous de colonne (41), lesquels s'appuient sur la plaque d'extrémité (40), et qui peuvent être fixées par des moyens agencés sur la plaque mobile (30),
caractérisé en ce que, sur la plaque mobile (30), il est prévu au moins un moyen de fixation, lequel est constitué sous forme de bride de fixation élastique flexible (31), qui peut être serrée et desserrée par des moyens moteurs pilotés et entoure coaxialement la colonne (50), et en ce que les écrous de colonne (41) s'appuyant sur la plaque d'extrémité (40) présentent des pièces (42,44) pour un blocage par contre-écrou propre.

2. Dispositif d'extraction de colonnes selon la revendication 1,
caractérisé en ce que les moyens moteurs pilotés (32) sont des vérins hydrauliques.

3. Dispositif d'extraction de colonnes selon la revendication 2,
caractérisé en ce que les vérins hydrauliques (32) peuvent être commandés de façon électrique ou électronique.

4. Dispositif d'extraction de colonnes selon la revendication 1,
caractérisé en ce que les écrous de colonne (41) sont constitués de deux pièces annulaires (42,44) qui présentent un filetage interne et peuvent être déplacées relativement l'une par rapport à l'autre par des éléments (43), coaxialement à la colonne (50).

5. Dispositif d'extraction de colonnes selon la revendication 4,
caractérisé en ce que le filetage (48) des pièces (42,44) de l'écrou de colonne (41) présente, par rapport au filetage (51) de la colonne (50), un jeu dans la plage de tolérance moyenne.

6. Dispositif d'extraction de colonnes selon la revendication 4,
caractérisé en ce que, comme éléments (43), des ressorts (45) sont prévus.

7. Dispositif d'extraction de colonnes selon la revendication 4,
caractérisé en ce que, comme éléments (43), des moyens moteurs commandables (46), par exemple des vérins hydrauliques, sont prévus.

8. Dispositif d'extraction de colonnes selon la revendication 4,
caractérisé en ce que les pièces (42), en regard de la plaque d'extrémité (40), de l'écrou de colonne (41) présentent une denture externe (47) qui engrène avec une roue solaire (11).

9. Dispositif d'extraction de colonnes selon la revendication 1,
caractérisé en ce que, sur la tête (52) de la colonne (50), qui peut être reliée à la plaque de serrage d'outil fixe (20), il est prévu une butée (53) présentant au moins une surface de réception (54) agencée parallèlement à l'axe (I) de la colonne et s'appuyant contre une barrette (55).

10. Dispositif d'extraction de colonnes selon les revendication 8 et 9,
caractérisé en ce que la longueur (b) de la surface de réception (54) est plus grande que la largeur de dent (a) de la roue solaire (11).
